# EUROPEAN PATENT SPECIFICATION

(11) **EP 4 060 311 B1**
(45) Date of publication and mention of the grant of the patent: **20.12.2023**
(21) Application number: 21753512.9
(22) Date of filing: 26.01.2021
(51) Int. Cl.: G01N 1/28, G01N 1/30, G01N 1/36, G01N 1/44, B01L 7/02, B01L 9/00

(54) **METHOD FOR HARDENING A PLASTINATED SPECIMEN IN A WATER BATH**
VERFAHREN ZUR HÄRTUNG EINER PLASTENIERTEN SCHNITTPROBE IN EINEM WASSERBAD
PROCÉDÉ DE DURCISSEMENT D'UN ÉCHANTILLON PLASTINÉ DANS UN BAIN D'EAU

(30) Priority: 13.02.2020 CN 202010090888
(43) Date of publication of application: 21.09.2022
(73) Proprietor: Dalian Medical University, Dalian, Liaoning 116044 (CN)
(72) Inventor: SUI, Hongjin, Dalian, Liaoning 116044 (CN); ZHANG, Jianfei, Dalian, Liaoning 116044 (CN)
(74) Representative: Bayramoglu et al.
(86) International application number: PCT/CN2021/073769
(87) International publication number: WO 2021/159953

(56) References cited:
- CN-A- 102 125 025
- CN-A- 102 428 908
- CN-A- 107 519 965
- CN-A- 110 178 838
- CN-A- 111 337 319
- CN-U- 206 356 011
- CN-U- 208 194 441
- CN-U- 208 194 441
- CN-U- 208 194 442
- CN-U- 209 173 965
- JP-A- 2010 075 870
- KR-A- 20110 087 044
- Memmert: "OPERATING INSTRUCTIONS", , 19 June 2018 (2018-06-19), pages 1-28, XP093029419, Retrieved from the Internet: URL:https://www.memmert.com/index.php?eID= dumpFile&t=f&f=5318&token=a5754c94ae408da3 0fe5b23c41ea693148e8c08e [retrieved on 2023-03-07]
- JIAN-FEI ZHANG ET AL: "Investigation of the ischioanal fossa: Application to abscess spread", CLINICAL ANATOMY, JOHN WILEY & SONS,, HOBOKEN, NJ, US, vol. 30, no. 8, 6 June 2017 (2017-06-06), pages 1029-1033, XP071744669, ISSN: 0897-3806, DOI: 10.1002/CA.22901
- CHUN PU ET AL: "The Use of P45 Plastination Technique to Study the Distribution of Preseptal and Preaponeurotic Fat Tissues in Asian Eyelids", CELL BIOCHEMISTRY AND BIOPHYSICS, SPRINGER US, NEW YORK, vol. 73, no. 2, 23 May 2015 (2015-05-23), pages 313-321, XP036216764, ISSN: 1085-9195, DOI: 10.1007/S12013-015-0581-0 [retrieved on 2015-05-23]

## Description

### Technical Field

The present invention relates to the field of biotechnology detection, and in particular to a hardening method in a water bath device for tomographically plastinated specimens.

### Background Art

In a traditional tomographically plastinated specimen manufacturing process, specimens are hardened by ultraviolet irradiation. After plastinated slices are dehydrated, they are then put in polymers for infiltration. The slices that have been infiltrated are placed into a mold similar to a shallow tray that is enclosed circumferentially. The mold is put in place, and polymers are re-injected. Then the mold is sealed circumferentially and placed horizontally. An ultraviolet lamp is placed above and below a glass plate box for irradiation to harden the slices. When this method is used to harden tomographic slices, the temperature needs to be raised at the beginning to initiate polymerization of polymers. After the polymerization starts, the polymers will release a lot of thermal energy. At this time, the heat of the polymerization needs to be released to avoid excessive temperature and explosive polymerization. Therefore, an air convection device is required to ensure heat dissipation. The use of ultraviolet irradiation for the hardening process has the following disadvantages: firstly, much heat is generated, the heat dissipation is slow, and the superposition of ultraviolet lamp irradiation and heat generation after polymerization makes it impossible for the slices in the glass plate box to transfer heat out quickly; secondly, the temperature is not easily controlled flexibly, which often causes explosive polymerization; thirdly, non-uniform heating will cause deformation of the slices; and fourthly, the hardening equipment is complicated. The "OPERATING INSTRUCTIONS" given in the URL: https://www.memmert.com/index.php?eID=dumpFile&t=f&f=5318&token=a5754c94ae408d a30fe5b23c41ea693148e8c08e discloses water baths with heating elements. JP2010075870A discloses a thermostat for physical and chemical test serving as a thermobath, a thermo-air tub, a thermo-moist chamber tub and a block thermostat with a single set, being quickly started up. CN209173965U discloses a constant-temperature water bath kettle. The article "Investigation of the Ischioanal Fossa: Application to Abscess Spread" (DOI:10.1002/CA.22901; Jian-Fei Zhang et al) discloses to use flat chamber method, wherein the flat chamber is composed of two plates of 5 mm tempered glass, latex tubing, and several large fold-back clamps; firstly the slices are put into the two glass plates, then the chamber is filled with P45 polyester through a funnel. The article "The Use of P45 Plastination Technique to Study the Distribution of Preseptal and Preaponeurotic Fat Tissues in Asian Eyelids" (DOI:10.1007/S12013-015-0581-0; Chun Pu et al) discloses to use P45 plastination technique

### Summary of the Invention

The technical problem to be solved by the present invention is to overcome the shortcomings in the prior art and provide a water bath hardening method using a water bath device for tomographically plastinated specimens.

The present invention is implemented by the following technical solutions:
A water bath hardening method using a water bath device for tomographically plastinated specimens, characterized by comprising a water bath box, a control box provided in the water bath box, heating tubes, a water circulation assembly, and positioning grids, wherein the upper surface of the water bath box is open, the heating tubes are provided inside the water bath box, the heating tubes are electrically connected to the control box, the water circulation assembly comprises a water circulation pipeline, a circulating water pump provided on the water circulation pipeline, and a drain outlet provided on a side wall of the water bath box, and the two sides of the inner walls of the water bath box are provided with positioning grids opposite each other; the water bath hardening method comprises following steps: a. dehydrating a plastinated slice, then putting it in a vertical embedding box; b. pouring liquid medicine into the vertical embedding box, and putting it in a vacuum box for vacuum infiltration; c. vertically inserting, after the infiltration is completed, the vertical embedding box between positioning grids in the water bath box, and carrying out water bath hardening by means of the water bath box; and d. taking out, after the liquid medicine is completely polymerized, the plastinated slice from the vertical embedding box; wherein the step a comprises: coating a sealing strip on the surface of one piece of tempered glass, and providing two pieces of tempered glass opposite each other through the sealing strip to form a flat vertical space with one open upper end and the other three sides sealed; fixing the surrounding three sides of the two pieces of tempered glass by fixing clips in an assisted manner; and inserting the plastinated slice between the two pieces of tempered glass from the open upper end, or placing the plastinated slice on the surface of one piece of tempered glass; coating the surface of the tempered glass around the plastinated slice with a sealing strip, and providing two pieces of tempered glass opposite each other through the sealing strip to form a flat vertical space with one open upper end and the other three sides sealed; and fixing the surrounding three sides of the two pieces of tempered glass by fixing clips in an assisted manner.

According to the above technical solution, preferably, the water circulation pipeline and the circulating water pump are provided in the control box, one end of the water circulation pipeline is provided with a circulating water inlet which is communicated to the outside of the control box, the control box is provided with a plurality of circulating water outlets on a side wall, and the other end of the water circulation pipeline is communicated with the circulating water outlets.

According to the above technical solution, preferably, a thermostat is provided in the control box, and the thermostat is electrically connected to the heating tubes.

According to the above technical solution, preferably, the heating tubes are provided close to the bottom surface of the water bath box.

According to the above technical solution, preferably, the heating tubes are provided close to the side wall of the water bath box.

According to the above technical solution, preferably, the side wall of the water bath box has a multi-layer structure, and the inner layer of the side wall of the water bath box is filled with a thermal insulation layer.

According to the above technical solution, preferably, the structure of the water bath box is a cuboid or a cylinder.

The beneficial effects of the present invention are as follows:
After infiltration, a vertical embedding box is inserted between the positioning grids in the water bath box, and a tomographically plastinated specimen is hardened by water bathing. The equipment is simple and the temperature is easily controlled. It has strong convection and quick heat conduction during heating and cooling, because water is a good conductor of heat. When the temperature needs to be raised at the beginning of curing, the heat of the water is transferred to the vertical glass box to raise the temperature of polymers in the box. After the polymerization is initiated, the temperature of polyesters rises and needs to be cooled. The excess heat can be quickly transferred to the water as well to ensure a stable temperature during the hardening process, which effectively avoids the occurrence of an explosive polymerization phenomenon. In addition, because the vertical embedding box is immersed in water and is in close contact with the water, it results in uniform heating and the slice is not easy to deform.

### Brief Description of the Drawings

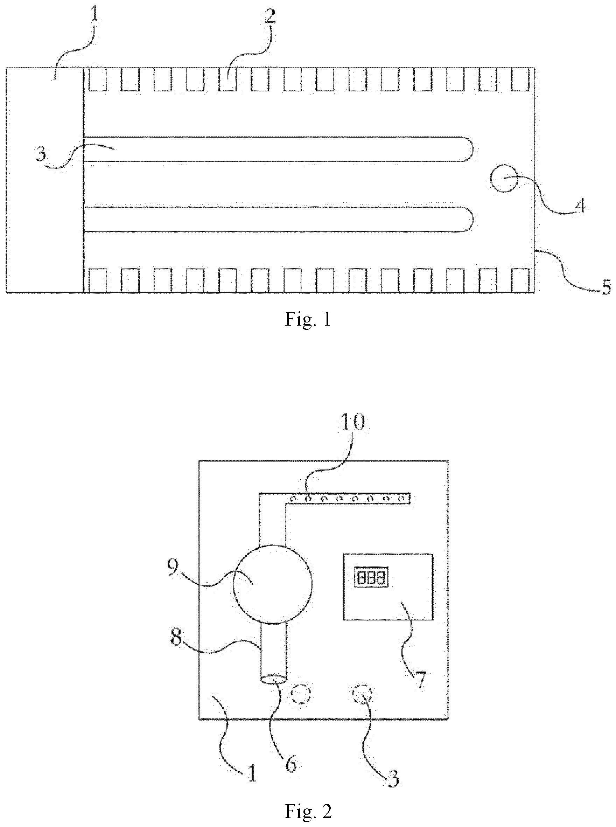

FIG. 1 is a schematic top view of the structure of the present invention.
FIG. 2 is a schematic side view of the structure of a control box part of the present invention.

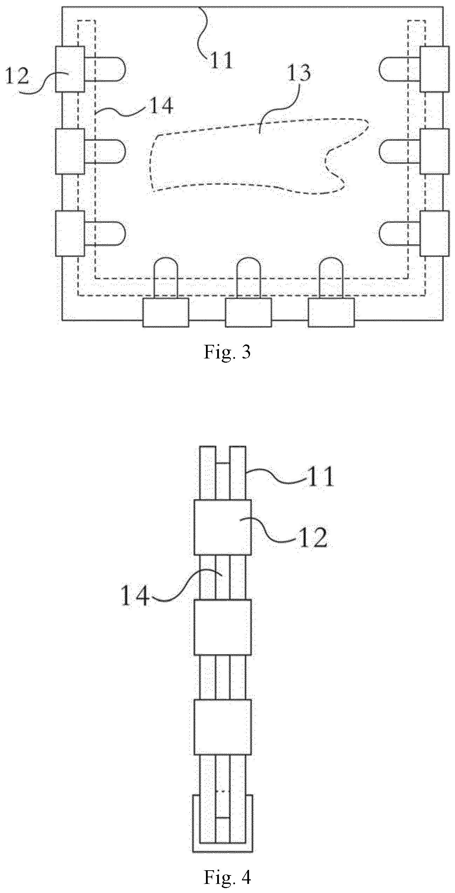

FIG. 3 is a schematic front view of the structure of a vertical embedding box part of the present invention.
FIG. 4 is a schematic side view of the structure of the vertical embedding box part of the present invention.

In the figures: 1. control box; 2. positioning grid; 3. heating tube; 4. drain outlet; 5. water bath box; 6. circulating water inlet; 7. thermostat; 8. water circulation pipeline; 9. circulating water pump; 10. circulating water outlet; 11. tempered glass; 12. fixing clip; 13. plastinated slice; 14. sealing strip.

### Detailed Description of Embodiments

In order to enable those skilled in the art to better understand the technical solutions of the present invention, the present invention will be further described in detail below with reference to the accompanying drawings and the preferred embodiments.

As shown in the figures, the present invention comprises a water bath box 5, a control box 1 provided in the water bath box 5, heating tubes 3, a water circulation assembly, and positioning grids 2. The upper surface of the water bath box 5 is open. The heating tubes 3 are provided inside the water bath box 5. The heating tubes 3 are electrically connected to the control box 1. The water circulation assembly comprises a water circulation pipeline 8, a circulating water pump 9 provided on the water circulation pipeline 8, and a drain outlet 4 provided on a side wall of the water bath box 5. The two sides of the inner walls of the water bath box 5 are provided with positioning grids 2 opposite each other. After infiltration, a vertical embedding box is inserted between the positioning grids 2 in the water bath box 5, and a tomographically plastinated specimen is hardened by water bathing. The equipment is simple and the temperature is easily controlled. It has strong convection and quick heat conduction during heating and cooling, because water is a good conductor of heat. When the temperature needs to be raised at the beginning of curing, the heat of the water is transferred to the vertical glass box to raise the temperature of polymers in the box. After the polymerization is initiated, the temperature of polyesters rises and needs to be cooled. The excess heat can be quickly transferred to the water as well to ensure a stable temperature during the hardening process, which effectively avoids the occurrence of an explosive polymerization phenomenon. In addition, because the vertical embedding box is immersed in water and is in close contact with the water, it results in uniform heating and the slice is not easy to deform.

According to the above embodiment, preferably, the water circulation pipeline 8 and the circulating water pump 9 are provided in the control box 1. One end of the water circulation pipeline 8 is provided with a circulating water inlet 6 which is communicated to the outside of the control box 1. The control box 1 is provided with a plurality of circulating water outlets 10 on a side wall, and the other end of the water circulation pipeline 8 is communicated with the circulating water outlets 10, such that water bodies in the water bath box 5 are continuously circulated and the temperature in the water bath box 5 is maintained equalized.

According to the above embodiment, preferably, a thermostat 7 is provided in the control box 1. The thermostat 7 is electrically connected to the heating tubes 3, and the set temperature of the thermostat 7 can be adjusted according to experimental requirements to maintain the water temperature in the box constant.

According to the above embodiment, preferably, the heating tubes 3 are provided close to the bottom surface of the water bath box 5.

According to the above embodiment, preferably, the heating tubes 3 are provided close to the side wall of the water bath box 5. There can be a plurality of heating tubes 3 at various positions in the water bath box 5, and the power of the heating tubes 3 can be changed by adjusting the thermostat 7 to keep the uniform heating and constant water temperature in the water bath box 5.

According to the above embodiment, preferably, the side wall of the water bath box 5 has a multi-layer structure, and the inner layer of the side wall of the water bath box 5 is filled with a thermal insulation layer to effectively avoid heat loss.

According to the above embodiment, preferably, the structure of the water bath box 5 is a cuboid or a cylinder.

The present invention also discloses a water bath hardening method for tomographically plastinated specimens, characterized by comprising the following steps: a. dehydrating a plastinated slice 13, then putting it in a vertical embedding box, wherein the vertical embedding box in this example is a fully enclosed or partially enclosed glass plate box made of two pieces of tempered glass 11 and a sealing material; b. pouring liquid medicine into the vertical embedding box, and putting it in a vacuum box for vacuum infiltration; c. vertically inserting, after the infiltration is completed, the vertical embedding box between positioning grids 2 in the water bath box 5, and carrying out water bath hardening by means of the water bath box 5; and d. taking out, after the liquid medicine is completely polymerized, the plastinated slice 13 from the vertical embedding box to obtain a finished slice after removing the double-sided tempered glass 11 of the vertical embedding box.

According to the above embodiment, preferably, step a comprises: coating a sealing strip 14 on the surface of one piece of tempered glass 11, and providing two pieces of tempered glass 11 opposite each other through the sealing strip 14 to form a flat vertical space with one open upper end and the other three sides sealed; fixing the surrounding three sides of the two pieces of tempered glass 11 by fixing clips 12 in an assisted manner; and inserting the plastinated slice 13 between the two pieces of tempered glass 11 from the open upper end. The vertical embedding box in this example is a vertical glass plate box made of two pieces of tempered glass 11 and a sealing strip 14, which has three sides enclosed and an opening facing upwards. Since the upper end of the embedding box is not sealed, acetone will escape from the top of the embedding box in the form of air bubbles during the vacuum infiltration process, so that there is no need to add polymers twice before curing, thus reducing process steps and drug consumption.

According to the above embodiment, preferably, step a comprises: placing the plastinated slice 13 on the surface of one piece of tempered glass 11; coating the surface of the tempered glass 11 around the plastinated slice 13 with a sealing strip 14, and providing two pieces of tempered glass 11 opposite each other through the sealing strip 14 to form a flat vertical space with one open upper end and the other three sides sealed; and fixing the surrounding three sides of the two pieces of tempered glass 11 by fixing clips 12 in an assisted manner. The vertical embedding box in this example is a vertical glass plate box made of two pieces of tempered glass 11 and a sealing strip 14, which has three sides enclosed and an opening facing upwards. Since the upper end of the embedding box is not sealed, acetone will escape from the top of the embedding box in the form of air bubbles during the vacuum infiltration process, so that there is no need to add polymers twice before curing, thus reducing process steps and drug consumption.

After infiltration, a vertical embedding box is inserted between the positioning grids 2 in the water bath box 5, and a tomographically plastinated specimen is hardened by water bathing. The equipment is simple and the temperature is easily controlled. It has strong convection and quick heat conduction during heating and cooling, because water is a good conductor of heat. When the temperature needs to be raised at the beginning of curing, the heat of the water is transferred to the vertical glass box to raise the temperature of polymers in the box. After the polymerization is initiated, the temperature of polyesters rises and needs to be cooled. The excess heat can be quickly transferred to the water as well to ensure a stable temperature during the hardening process, which effectively avoids the occurrence of an explosive polymerization phenomenon. In addition, because the vertical embedding box is immersed in water and is in close contact with the water, it results in uniform heating and the slice is not easy to deform.

The above descriptions are merely preferred embodiments of the present invention. The scope of the invention is defined in the appended claims.

## Claims

1. A water bath hardening method using a water bath device for tomographically plastinated specimens, wherein comprising a water bath box (5), a control box (1) provided in the water bath box (5), heating tubes (3), a water circulation assembly, and positioning grids (2), wherein the upper surface of the water bath box (5) is open, the heating tubes (3) are provided inside the water bath box (5), the heating tubes (3) are electrically connected to the control box (1), the water circulation assembly comprises a water circulation pipeline (8), a circulating water pump (9) provided on the water circulation pipeline (8), and a drain outlet (4) provided on a side wall of the water bath box (5), and the two sides of the inner walls of the water bath box (5) are provided with positioning grids (2) opposite each other; the water bath hardening method comprises following steps:
a. dehydrating a plastinated slice (13), then putting it in a vertical embedding box; b. pouring liquid medicine into the vertical embedding box, and putting it in a vacuum box for vacuum infiltration; c. vertically inserting, after the infiltration is completed, the vertical embedding box between positioning grids (2) in the water bath box (5), and carrying out water bath hardening by means of the water bath box (5); and d. taking out, after the liquid medicine is completely polymerized, the plastinated slice (13) from the vertical embedding box; **characterized in that** the step a comprises:
coating a sealing strip (14) on the surface of one piece of tempered glass (11), and providing two pieces of tempered glass (11) opposite each other through the sealing strip (14) to form a flat vertical space with one open upper end and the other three sides sealed; fixing the surrounding three sides of the two pieces of tempered glass (11) by fixing clips (12) in an assisted manner; and inserting the plastinated slice (13) between the two pieces of tempered glass (11) from the open upper end
or
placing the plastinated slice (13) on the surface of one piece of tempered glass (11); coating the surface of the tempered glass (11) around the plastinated slice (13) with a sealing strip (14), and providing two pieces of tempered glass (11) opposite each other through the sealing strip to form a flat vertical space with one open upper end and the other three sides sealed; and fixing the surrounding three sides of the two pieces of tempered glass (11) by fixing clips (12) in an assisted manner.

2. The water bath hardening method according to claim 1, wherein the water circulation pipeline (8) and the circulating water pump (9) are provided in the control box (1), one end of the water circulation pipeline (8) is provided with a circulating water inlet (6) which is communicated to the outside of the control box (1), the control box (1) is provided with a plurality of circulating water outlets (10) on a side wall, and the other end of the water circulation pipeline (8) is communicated with the circulating water outlets (10).

3. The water bath hardening method according to claim 2, wherein a thermostat (7) is provided in the control box (1), and the thermostat is electrically connected to the heating tubes (3).

4. The water bath hardening method according to claim 3, wherein the heating tubes (3) are provided close to the bottom surface of the water bath box (5).

5. The water bath hardening method according to claim 3 or 4, wherein the heating tubes (3) are provided close to the side wall of the water bath box (5).

6. The water bath hardening method according to claim 1, wherein the side wall of the water bath box (5) has a multi-layer structure, and the inner layer of the side wall of the water bath box (5) is filled with a thermal insulation layer.

7. The water bath hardening method according to claim 1 or 6, wherein the structure of the water bath box (5) is a cuboid or a cylinder.

## Patentansprüche

1. Wasserbadhärtungsverfahren unter Verwendung einer Wasserbadvorrichtung für tomographisch plastinierte Präparate, umfassend einen Wasserbadkasten (5), einen Steuerkasten (1), der in dem Wasserbadkasten (5) vorgesehen ist, Heizrohre (3), eine Wasserzirkulationsanordnung und Positioniergitter (2), wobei die obere Fläche des Wasserbadkastens (5) offen ist, die Heizrohre (3) im Inneren des Wasserbadkastens (5) vorgesehen sind, die Heizrohre (3) elektrisch mit dem Steuerkasten (1) verbunden sind, die Wasserzirkulationsanordnung eine Wasserzirkulationsleitung (8), eine Zirkulationswasserpumpe (9), die an der Wasserzirkulationsleitung (8) vorgesehen ist, und einen Abflussauslass (4) umfasst, der an einer Seitenwand des Wasserbadkastens (5) vorgesehen ist, und die beiden Seiten der Innenwände des Wasserbadkastens (5) mit Positioniergittern (2) versehen sind, die einander gegenüberliegen; wobei das Wasserbadhärtungsverfahren die folgenden Schritte umfasst:
a. Dehydrieren einer plastinierten Scheibe (13), dann Einbringen dieser in einen vertikalen Einbettungskasten; b. Gießen eines flüssigen Medikaments in den vertikalen Einbettungskasten und Einbringen dieses in einen Vakuumkasten zur Vakuuminfiltration; c. vertikales Einsetzen des vertikalen Einbettungskastens zwischen Positioniergittern (2) in den Wasserbadkasten (5), nachdem die Infiltration abgeschlossen ist, und Ausführen einer Wasserbadhärtung mittels des Wasserbadkastens (5); und d. Herausnehmen der plastinierten Scheibe (13) aus dem vertikalen Einbettungskasten, nachdem das flüssige Medikament vollständig polymerisiert ist; **dadurch gekennzeichnet, dass** der Schritt a umfasst:
Beschichten eines Dichtungsstreifens (14) auf der Fläche eines Stücks gehärteten Glases (11) und Vorsehen von zwei Stücken gehärteten Glases (11), die einander gegenüberliegen, durch den Dichtungsstreifen (14), um einen flachen vertikalen Raum mit einem offenen oberen Ende und den anderen drei Seiten, die abgedichtet sind, zu bilden; Befestigen der umgebenden drei Seiten der zwei Stücke gehärteten Glases (11) durch Befestigungsklammern (12) in einer unterstützten Weise; und Einsetzen der plastinierten Scheibe (13) zwischen die zwei Stücke gehärteten Glases (11) von dem offenen oberen Ende
oder
Platzieren der plastinierten Scheibe (13) auf der Fläche eines Stücks gehärteten Glases (11); Beschichten der Fläche des gehärteten Glases (11) um die plastinierte Scheibe (13) herum mit einem Dichtungsstreifen (14) und Vorsehen von zwei Stücken gehärteten Glases (11), die einander gegenüberliegen, durch den Dichtungsstreifen, um einen flachen vertikalen Raum mit einem offenen oberen Ende und den anderen drei Seiten, die abgedichtet sind, zu bilden; und Befestigen der umgebenden drei Seiten der zwei Stücke gehärteten Glases (11) durch Befestigungsklammern (12) in einer unterstützten Weise.

2. Wasserbadhärtungsverfahren nach Anspruch 1, wobei die Wasserzirkulationsleitung (8) und die Zirkulationswasserpumpe (9) in dem Steuerkasten (1) vorgesehen sind, ein Ende der Wasserzirkulationsleitung (8) mit einem Zirkulationswassereinlass (6) versehen ist, der mit der Außenseite des Steuerkastens (1) in Verbindung steht, der Steuerkasten (1) mit mehreren Zirkulationswasserauslässen (10) an einer Seitenwand versehen ist und das andere Ende der Wasserzirkulationsleitung (8) mit den Zirkulationswasserauslässen (10) in Verbindung steht.

3. Wasserbadhärtungsverfahren nach Anspruch 2, wobei ein Thermostat (7) in dem Steuerkasten (1) vorgesehen ist und der Thermostat elektrisch mit den Heizrohren (3) verbunden ist.

4. Wasserbadhärtungsverfahren nach Anspruch 3, wobei die Heizrohre (3) in der Nähe der Bodenfläche des Wasserbadkastens (5) vorgesehen sind.

5. Wasserbadhärtungsverfahren nach Anspruch 3 oder 4, wobei die Heizrohre (3) in der Nähe der Seitenwand des Wasserbadkastens (5) vorgesehen sind.

6. Wasserbadhärtungsverfahren nach Anspruch 1, wobei die Seitenwand des Wasserbadkastens (5) eine mehrschichtige Struktur aufweist und die innere Schicht der Seitenwand des Wasserbadkastens (5) mit einer Wärmeisolationsschicht gefüllt ist.

7. Wasserbadhärtungsverfahren nach Anspruch 1 oder 6, wobei die Struktur des Wasserbadkastens (5) ein Quader oder ein Zylinder ist.

## Revendications

1. Procédé de durcissement par bain d'eau utilisant un dispositif de bain d'eau destiné à des échantillons plastinés par tomographie, dans lequel comprenant un bac de bain d'eau (5), un boîtier de commande (1) prévu dans le bac de bain d'eau (5), des tubes de chauffage (3), un ensemble de circulation d'eau et des grilles de positionnement (2), dans lequel la surface supérieure du bac de bain d'eau (5) est ouverte, les tubes de chauffage (3) sont prévus à l'intérieur du bac de bain d'eau (5), les tubes de chauffage (3) sont connectés électriquement au boîtier de commande (1), l'ensemble de circulation d'eau comprend une canalisation de circulation d'eau (8), une pompe de circulation d'eau (9) prévue sur la canalisation de circulation d'eau (8), et une sortie de vidange (4) prévue sur une paroi latérale du bac de bain d'eau (5), et les deux côtés des parois internes du bac de bain d'eau (5) sont pourvus de grilles de positionnement (2) opposées l'une à l'autre; le procédé de durcissement par bain d'eau comprend les étapes suivantes:
a. déshydratation d'une tranche plastinée (13), puis son placement dans un bac d'incorporation verticale; b versement d'un médicament liquide dans le bac d'incorporation verticale, et son placement dans une boîte à vide pour une infiltration sous vide; c insertion verticale, après que l'infiltration est terminée, du bac d'incorporation verticale entre des grilles de positionnement (2) dans le bac de bain d'eau (5), et réalisation d'un durcissement par bain d'eau au moyen du bac de bain d'eau (5); et d retrait, après la polymérisation complète du médicament liquide, de la tranche plastinée (13) du bac d'incorporation verticale:
revêtement d'une bande d'étanchéité (14) sur la surface d'un pièce de verre trempé (11), et fourniture de deux pièces de verre trempé (11) opposées l'une à l'autre à travers la bande d'étanchéité (14) pour former un espace vertical plat avec une extrémité supérieure ouverte et les trois autres côtés scellés; fixation des trois côtés environnants des deux pièces de verre trempé (11) par fixation de clips (12) d'une manière assistée; et insertion de la tranche plastinée (13) entre les deux pièces de verre trempé (11) à partir de l'extrémité supérieure ouverte
ou
placement de la tranche plastinée (13) sur la surface d'une pièce de verre trempé (11); revêtement de la surface du verre trempé (11) autour de la tranche plastinée (13) avec une bande d'étanchéité (14), et fourniture de deux pièces de verre trempé (11) opposées l'une à l'autre à travers la bande d'étanchéité pour former un espace vertical plat avec une extrémité supérieure ouverte et les autres trois côtés scellés ; et fixation des trois côtés environnants des deux pièces de verre trempé (11) par fixation de clips (12) d'une manière assistée.

2. Procédé de durcissement par bain d'eau selon la revendication 1, dans lequel la canalisation de circulation d'eau (8) et la pompe de circulation d'eau (9) sont prévues dans le boîtier de commande (1), une extrémité de la canalisation de circulation d'eau (8) est pourvue d'une entrée de circulation d'eau (6) qui est en communication avec l'extérieur du boîtier de commande (1), le boîtier de commande (1) est pourvu d'une pluralité de sorties d'eau de circulation (10) sur une paroi latérale, et l'autre extrémité de la canalisation de circulation d'eau (8) est en communication avec les sorties de circulation d'eau (10).

3. Procédé de durcissement par bain d'eau selon la revendication 2, dans lequel un thermostat (7) est prévu dans le boîtier de commande (1), et le thermostat est connecté électriquement aux tubes de chauffage (3).

4. Procédé de durcissement par bain d'eau selon la revendication 3, dans lequel les tubes de chauffage (3) sont prévus à proximité de la surface de fond du bac de bain d'eau (5).

5. Procédé de durcissement par bain d'eau selon la revendication 3 ou 4, dans lequel les tubes de chauffage (3) sont prévus à proximité de la paroi latérale du bac de bain d'eau (5).

6. Procédé de durcissement par bain d'eau selon la revendication 1, dans lequel la paroi latérale du bac de bain d'eau (5) présente une structure multicouche, et la couche interne de la paroi latérale du bac de bain d'eau (5) est remplie d'une couche d'isolation thermique.

7. Procédé de durcissement par bain d'eau selon la revendication 1 ou 6, dans lequel la structure du bac de bain d'eau (5) est un cuboïde ou un cylindre.
